# EUROPEAN PATENT APPLICATION

(11) **EP 1 427 202 A2**
(43) Date of publication of application: **09.06.2004**
(21) Application number: 03024589.8
(22) Date of filing: 28.10.2003
(51) Int. Cl.: H04N 5/76

(54) **Method and apparatus for recording and reproducing digital video data**

(30) Priority: 29.11.2002 JP 2002347507
(71) Applicant: Kabushiki Kaisha Toshiba, Tokyo 105-8001 (JP)
(72) Inventor: Hajime Suda Toshiba Corp, Minato-ku Tokyo 105-8001 (JP); Hiroaki Unno Toshiba Corp, Minato-ku Tokyo 105-8001 (JP)
(74) Representative: Henkel, Feiler & Hänzel

(57) **Abstract**

Disclosed herein is a data-recording/reproducing apparatus (10) that is connected to the Internet (30). The apparatus (10) has a memory (111). The apparatus (10) downloads program-recording reservation data from an iEPG site (40) connected to the Internet (30). In the apparatus (10), the memory 111 stores the program-recording reservation data.

## Description

This invention relates generally to an apparatus for recording and reproducing broadcast TV programs. More particularly, it relates to a technique of reserving the recording broadcast TV programs.

In recent years, apparatus have been developed, which record and reproduce, for example, TV programs broadcast on ground waves or from digital TV broadcast satellites, on DVDs (Digital Video Disks) or in HDDs (Hard Disk Drives). Of these apparatus, those which record and reproduce TV programs on DVDs are called "DVD video recorders." And those which record and reproduce TV programs in HDDs are known as "HDD video records."

Most digital program-recording/reproducing apparatus can reserve the recording of any desired broadcast TV program, by virtue of so-called EPG (Electronic Program Guide). (See Jpn. Pat. Appln. KOKAI Publication No. 2002-247463, for example.) EPG is the function of electronically selecting the channel of a desired TV program and reserving the recording of the TV program, in accordance with the EPG information received from broadcast digital TV information.

Various digital recording/reproducing apparatus have been recently developed. They can be connected to the Internet to receive the EPG information from a specific site (iEPG site) and reserve the recording of broadcast TV programs. Most apparatus of this type are connected to or combined with computers that have a Web browser for retrieving data from sites existing on the Internet.

A digital recording/reproducing apparatus of this type can always acquire EPG information from not only broadcast digital TV information, but also the Internet. It can therefore mitigate the restriction imposed on the reservation of TV program recording and perform additional functions. Nonetheless, it needs a dedicated application program in order to register the EPG information obtained from the iEPG site, as program-recording reservation data. Thus, the dedicated application program must be set in the digital recording/reproducing apparatus. In view of this, the apparatus cannot be said to be friendly to most users.

An object of the invention is to provide an apparatus for recording and reproducing digital video data and acquiring program-recording reservation data from a network such as the Internet.

The apparatus comprises a communications unit, a reservation-registering unit, and a data-acquiring unit. The communications unit can be connected to a network and transmits and receive data. The reservation-registering unit registers recording reservation data provided from the network. The data-acquiring unit transmits a request for the recording reservation data to an information-providing site connected to the network, in response to a request transmitted from an information terminal connected to the network. It acquires the recording reservation data provided from the information-providing site, and transfers the recording reservation data to the reservation-registering unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the major components of a program-recording recording/reproducing apparatus according an embodiment of this invention;
FIGS. 2 and 3 are diagrams explaining a method of reserving the recording of a desired broadcast TV program, according to the invention; and
FIG. 4 is a flowchart explaining the sequence of steps of reserving the recording of a desired TV, according to this invention.

An embodiment of the present invention will be described, with reference to the accompanying drawings.

### (Recording/Reproducing Apparatus)

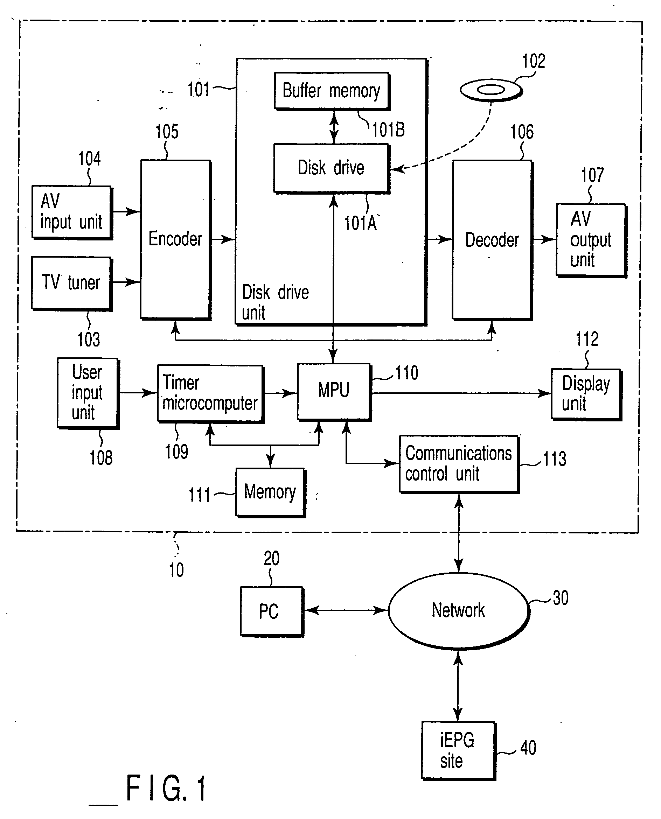

FIG. 1 is a block diagram illustrating a recording recording/reproducing apparatus 10 that is an embodiment of the present invention.

The apparatus 10 comprises a disk drive unit 101, a TV tuner 103, an AV input unit 104, and an encoder 105. The disk drive unit 101 can record broadcast TV programs. The TV tuner 103 is configured to receive broadcast TV programs. The AV input unit 104 can input AV (Audio-Video) signals, which are digital signals.

The disk drive unit 101 is a recording unit that records broadcast TV programs. The unit 101 includes a disk drive 101A and a buffer memory 101B. The buffer memory 101B temporarily stores the video data (containing audio data) encoded by the encoder 105.
The disk drive 101A can write and read data on and from a disk-shaped recording medium 102. The medium 102 is, for example, a DVD-RAM, a DVD-R or a hard disk. The TV tuner 103 selects the channel of any desired TV program (video signals). The TV tuner 103 includes an A/D converter. This converter converts the video signals of the channel selected (i.e., the desired TV program) to digital video data. The encoder 105 receives the digital video data and compresses the same in accordance with a prescribed data-compressing standard.

The apparatus 10 further comprises a decoder 106, AV output unit 107, user input unit 108, a timer microcomputer (timer MPU) 109, microprocessor (MPU) 110, memory 111, display unit 112 and communications control unit 113. The decoder 106 can reproduce the TV program recorded.

The decoder 106 receives the program data (compressed data) from the disk drive unit 101 and decodes it to digital video data. The digital video data is sent to the AV output unit 107. The AV output unit 107 converts the digital video data to analog signals. The analog signals are output to, for example, a monitor.

The user input unit 108 is, for example, a keyboard. The user may operate the unit 108 to input various modes, thus operating the apparatus 10 in these modes. The timer MPU 109 receives and registers program-recording reservation data (EPG information). It reserves the recording of desired TV programs in accordance with the program-recording reservation data. The MPU 110 is the main control unit in the apparatus 10. The MPU 110 can acquire and manage the program-recording reservation data as will be described later. The memory 111 is shared by the timers MPU 109 and the MPU 110. The memory 111 is used mainly to store the program-recording reservation data (i.e., EPG information).

The display unit 112 has, for example, a liquid-crystal display panel. It displays data to be used to reserve the recording of any desired TV program, under the control of the CPU 110. The communications control unit 113 is connected to a network 30. The unit 113 has a network device that is designed to communicate (or exchange various data) with any devices on the network 30. The network 30 may be a LAN, the Internet or any other network. The present embodiment is connected to the Internet.

An information terminal (PC) 20 and an iEPG site 40 are connected to the Internet 30. The PC 20 is, for example, a personal digital assistant (PAD) or a mobile telephone. The iEPG site is an information-providing site that gives EPG information (i.e., program-recording reservation data) to the apparatus 10 via the Internet 30.

### (Reservation of the Recording of a Desired Program)

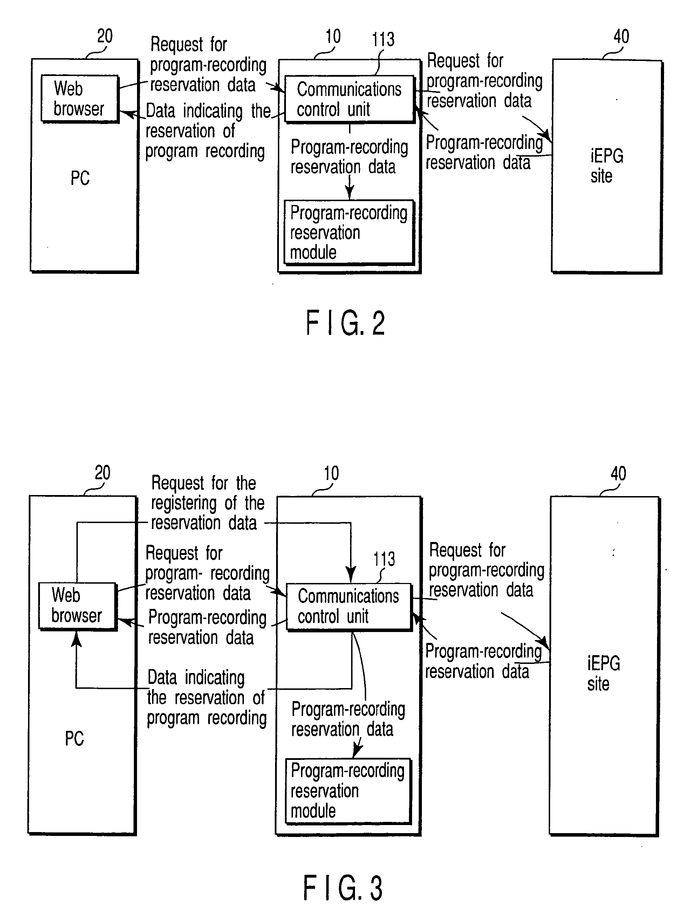

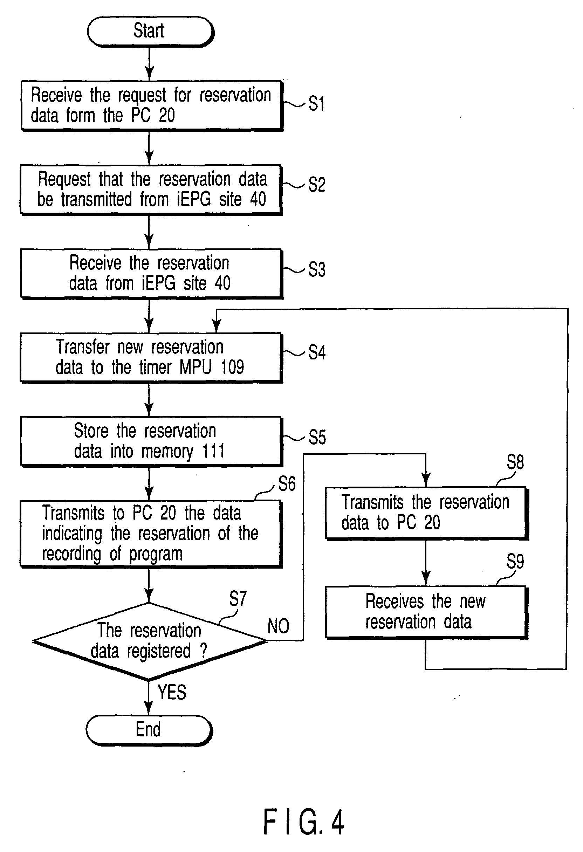

The apparatus 100 reserves the recording of a desired program, as will be described with reference to FIGS. 1, 2 and 3 and the flowchart of FIG. 4. First, the principle on which the recording of the desired program is reserved will be outlined with reference to FIG. 2.

As FIG. 2 shows, the communications control unit 113 can exchange various data with the PC 20 and iEPG site 40 via the Internet 30. The data is necessary for reserving the recording of the desired program. Assume that the user of the apparatus 10 operates the PC 20 at a place far from the apparatus 10, to reserve the recording of a TV program he or she want to enjoy.

The user operates the PC 20, inputting a request for program-recording reservation data. The Web browser in the PC 20 transmits the request via the Internet 30 to the apparatus 10. In response to the request, the apparatus 10 acquires the program-recording reservation data (i.e., EPG information) from the iEPG site. In the apparatus 10, the reservation data is supplied to the program-recording reservation module (application software). More precisely, the timer MPU 109 activates the module, storing (or registering) the program-recording reservation data in the memory 111. Then, the apparatus 10 transmits the data indicating that the recording of the TV program has been reserved, to the PC via the Internet 30. The data indicates that program-recording reservation data has been downloaded into the apparatus 10.

As FIG. 3 shows, the apparatus 10 transfers the program-recording reservation data (i.e., EPG information) to the PC 20. This data has been acquired from the iEPG site. The apparatus 10 then transfers the reservation data to the program-recording reservation module, in response to a request for the registering of the reservation data, which is transmitted from the PC 20.

The sequence of reserving the recording of a TV program will be explained, with reference to the flowchart of FIG. 4.

The communications control unit 113 receives a request for the reservation data (i.e., EPG information) from the PC 20 via the Internet 30, by virtue of the browser function of the PC 20 (Step S1). This request is supplied to the MPU 110. When the MPU 110 receives the request, it accesses the iEPG site 40 connected to the Internet 30 and requests for the program-recording reservation data (Step S2).

Upon receipt of the request from the MPU 110, the iEPG 40 transmits the reservation data to the apparatus 10. The MPU 110 receives the reservation data from the iEPG site 40 (Step S3). The MPU 110 transfers the data to the timer MPU 109 (Step S4). The timer MPU 109 stores the reservation data into the memory 111. The data is thereby registered (Step S5). The MPU 110 generates data indicating that the recording of the program has been reserved and transmits this data to the PC 20 (Step S6). Then, it is determined whether the program-recording reservation data has been registered or not (Step S7). If YES in Step S7, the process of reserving the recording of a TV program is terminated.

The user can thus cause the apparatus 10 to reserve the recording of any TV program he or she wants to enjoy. He or she only need to operate the PC 20 at a place far from the apparatus 10, sending commands to the apparatus 10 via the Internet 30. The user may operate PC 20 to access the iEPG site 40 via the Internet 30, thus confirming the reservation data that should be registered in the apparatus 10.

If NO in Step S7, that is if the program-recording reservation data has not been registered, the apparatus 10 transmits the reservation data to the PC 20 via the Internet 30 (Step S8). The PC 20 displays the reservation data it has just received. The user can therefore confirm the reservation data. If necessary, the user may operate the PC 20 to change the reservation data or add new data items to the reservation data. New program-recording reservation data is thereby generated.

The PC 20 transmits the new reservation data to the apparatus 10 via the Internet 30. The apparatus 10 receives the new reservation data (Step S9). In the apparatus 10, the new reservation data is transferred to the timer MPU 109 (Step S4) and stored into the memory 111 (Step S5). The program-recording reservation data is thereby renewed or updated. The items of reservation data which can be changed include recording date, recording-start time, recording-end time, channel number, program title, and summary of the program, and the like. The data items that can be added to the reservation data are image quality, sound quality, genre of the program (movie, music, variety show, etc.), and the like.

The apparatus 10 described above can acquire the program-recording reservation data from any iEPG site connected to the Internet 30. It can register the reservation data, though the PC 20 stores no data-registering application program. That is, the apparatus 10 functions as an HTTP client connected to the Internet and can acquire the reservation data from, for example, an iEPG site 40 (i.e., information-providing site). The apparatus 10 can register the reservation data. The user only needs to operate the information terminal 20 (e.g., portable PC, mobile telephone, or the like.) connected to the Internet, in order to reserve the recording of any TV program desired, even at a place very far from the apparatus 10. The user can easily reserve the recording of TV programs and can set various modes in which the apparatus 10 should record and reproduce the programs.

As has been described, the present invention can provide a program-recording/reproducing apparatus that can easily acquire program-recording reservation data from a network such as the Internet and can register the reservation data, and provide a method of reserving the recording of TV programs. The apparatus can be connected to a network such as the Internet. Once so connected, it can acquire reservation data from an information-providing site (e.g., iEPG site) that is connected to the Internet. It can then register the reservation data, in response to a request made by an external unit such as an information terminal.

No data-registering application program is installed in the information terminal. The program-recording/reproducing apparatus can, nonetheless, function as an HTTP client connected to the Internet. It can acquire the reservation data from an information-providing site (e.g., iEPG site) and register the reservation data. The user only needs to operate his or her information terminal (e.g., portable PC, mobile telephone, or the like) connected to the Internet, to reserve the recording of any TV program desired, even at a place very far from the apparatus. The user can therefore easily reserve the recording of the TV programs and set various modes in which the apparatus should record and reproduce the programs.

## Claims

1. A digital video-data recording/reproducing apparatus **characterized by** comprising:
a communications unit (113) which is to be connected to a network (30) and which transmits and receive data;
a reservation-storing unit (109) which stores recording reservation data provided from the network; and
a data-acquiring unit (110) which transmits a request for the recording reservation data to an information-providing site (40) connected to the network, in response to a request transmitted from an information terminal (20) connected to the network (30), acquires the recording reservation data provided from the information-providing site (40), and transfers the recording reservation data:to the reservation-storing unit (109).

2. The apparatus according to claim 1, **characterized in that** the data-acquiring unit (110) generates and transmits data-acquisition data to the information terminal via the communications unit after acquiring the recording reservation data, the data-acquisition data indicating that the data-acquiring unit has acquired the recording reservation data.

3. The apparatus according to claim 1, **characterized in that** the data-acquiring unit (110) transmits the recording reservation data acquired from the information-providing site, to the information terminal via the network.

4. The apparatus according to claim 1, **characterized in that** the reservation-storing unit (109) and the data-acquiring unit (110) shares a memory (111) which is configured to store the recording reservation data, and the memory stores recording reservation data changed or containing additional data items and transmitted from the information terminal to the data-acquiring unit via the communications unit.

5. The apparatus according to claim 1, **characterized in that** the network is the Internet, the recording reservation data is electronic program guide information, the information terminal is connected to the Internet, the information-providing site (40) is connected to the Internet and provides electronic program guide information, and the data-acquiring unit (110) acquires the electronic program guide information by downloading the same, in response to a request made by the information terminal.

6. A method of reserving the recording of a program, for use in a data recording/reproducing apparatus (10) which comprises a communications unit (113) connected to a network (30) and which stores recording reservation data provided from an external device via the network, said method comprising:
receiving a request for acquiring the recording reservation data, from an information terminal connected to the network (S1);
transmitting a request for the recording reservation data to an information-providing site (40) connected to the network, in response to the request for acquiring the recording reservation data (S2); and
acquiring and storing the recording reservation data provided from the information-providing site (S3, S5).

7. The method according to claim 6, **characterized by** further comprising:
transmitting data indicating data-acquisition to the information terminal after the recording reservation data is acquired from the information-providing site (S6).

8. The method according to claim 6, **characterized by** further comprising:
transmitting the recording reservation data is acquired from the information-providing site, to the information terminal (S8).

9. The method according to claim 6, **characterized by** further comprising:
receiving the recording reservation data changed or containing additional data items, from the information terminal (S9); and
storing the recording reservation data into a memory (S5).

10. The method according to claim 6, **characterized in that** the network is the Internet, the recording reservation data is electronic program guide information, the information terminal is connected to the Internet, the information-providing site is connected to the Internet and provides electronic program guide information, and the electronic program guide information is acquired by downloading the same from the information-providing site (S3).
